# EUROPEAN PATENT SPECIFICATION

(11) **EP 4 484 307 B1**
(45) Date of publication and mention of the grant of the patent: **09.12.2026**
(21) Application number: 24185032.0
(22) Date of filing: 27.06.2024
(51) Int. Cl.: B65B 11/00, B25J 9/00, B25J 11/00, B25J 15/00, B25J 15/02, B25J 15/06, B25J 15/10, B65B 35/16, B65B 35/18, B65B 35/26, B65B 49/08, B65B 61/00, B65B 65/00, B25J 9/10, B65B 41/04

(54) **MANIPULATOR OF ARTICLES IN BOXES AND RELATED PROCESS FOR MOVING ARTICLES IN BOXES**
MANIPULATOR FÜR GEGENSTÄNDE IN SCHACHTELN UND VERFAHREN ZUM BEWEGEN VON GEGENSTÄNDEN IN SCHACHTELN
MANIPULATEUR D'ARTICLES DANS DES BOÎTES ET PROCÉDÉ CONNEXE POUR DÉPLACER DES ARTICLES DANS DES BOÎTES

(30) Priority: 28.06.2023 IT 202300013449
(43) Date of publication of application: 01.01.2025
(73) Proprietor: R.A JONES & CO., Covington, KY 41017 (US)
(72) Inventor: DAKESSIAN, Cristian, 40133 Bologna (IT); PARISINI, Gianluca, 40133 Bologna (IT)
(74) Representative: Susanetto, Carlo

(56) References cited:
- EP-A1- 0 994 029
- EP-B1- 1 742 841
- WO-A1-2023/094969
- CA-A1- 2 640 989
- CN-A- 106 743 714
- US-A1- 2013 033 049

## Description

The present invention relates to a manipulator of articles in boxes and a related packaging apparatus. It is also related to a related process for moving articles in boxes.

The present invention has a preferred, though not exclusive, application in the field of forming packages with a box-like body, for the sake of simplicity also called packages or boxes, for boxing articles with variable geometry, in turn containing products, which may be food items or otherwise. An example of products with variable geometry is sachets of cereal, e.g. oat flakes or puffed rice, which can be referred to later without loss of generality.

In particular, in this technical sector, devices are known for packaging articles in boxes, based mainly on the use of conveyor belts, in which the boxing step is carried out by means of an element which pushes the product, e.g. a cereal sachet, inside a package with a box-like body, also definable as a pre-formed rigid box, comprising one or more openings through which the sachet is inserted and which is closed by means of folding devices arranged along the conveyor belts.

Alternatively, some systems envisage boxing the article with variable geometry by depositing it in a mandrel and wrapping a cardboard blank around the mandrel itself so as to form the box-like body of the package (known as the "wrap-around" process).

Typically, in cereal sachet packaging equipment, the cereal sachets are moved on linear conveyor belts and, if necessary, they pass from one belt to another by gravity. Furthermore, the transport of the sachet inside the box and the closing of the box takes place along linear conveyor belts, equipped with folding and gluing devices at their side ends.

Prior art patent document WO 2023/094969 A1 discloses a known manipulator of articles in boxes.

In the present description as well as in the accompanying claims, some terms and expressions are deemed to have, unless otherwise expressly indicated, the meaning expressed in the following definitions.

A product is said to have "variable geometry" when, due to the nature of the material it contains, the product does not have a defined shape. In particular, the product may be a sachet or bag containing loose material, e.g. granular material or flakes or powder, or material in liquid form.

The term "adhesion element" referring to a manipulator means a retaining element capable of retaining an object by contact, specifically it can be suction cups or magnets, Velcro and/or surfaces coated with temporary glues.

"Box" or "package" means any container adapted to contain a plurality of articles for the purpose of their packaging, which can be made starting from a blank by folding around a mandrel and subsequent fixing at edges or panels thereof.

The term "article" means any product which can be packaged in boxes.

"Packaging" one or more articles in a box means obtaining a box containing said one or more articles. Such packaging can be obtained by inserting one or more articles into an already formed box or, preferably, it can be obtained by forming a box around the one or more articles to be contained.

"Mandrel" means a container capable, on the one hand, of accommodating and supporting the article to be packaged and, on the other hand, of providing an effective abutment for folding the blank when wrapped around it.

For this purpose, it should be noted that accommodating and supporting the article does not in itself imply that the article must be entirely accommodated inside the mandrel or completely supported by it, but it is sufficient for it to be accommodated in the moment in which the blank is wrapped around the mandrel.

Likewise, it should be noted that also the abutment of the blank does not imply in itself that the blank is abutted for its entire surface by the mandrel, but it is sufficient for it to be abutted to an extent such as to allow the correct folding necessary for the formation of the box.

"Vertical" or "vertically" refers to a direction parallel to the direction defined by the force of gravity or deviating from the direction defined by the force of gravity by a maximum of 10°; "lowering" refers to a vertical displacement with a direction concordant to gravity, "lifting" refers to a vertical displacement with a direction discordant to gravity.

"Horizontal" or "horizontally" means a direction belonging to a plane perpendicular to the direction of the force of gravity.

"Gripping configuration" means a closed configuration of gripping elements, in which the gripping elements are brought closer together so that a box can be grasped.

"Open configuration" refers to a configuration in which the gripping elements are spaced apart with respect the gripping configuration so that a box cannot be grasped.

The Applicant first noted that the movement of articles in boxes which are not yet closed at their longitudinal ends can be a critical factor in the packaging process. In fact, in this configuration, the article is potentially capable of escaping from the open box and this unwanted event could cause serious damage to the article and even stop production.

In particular, the Applicant verified that such an eventuality becomes highly probable whenever the movement of the box involves a curvilinear trajectory, where the product's escape from the box may be favoured by the action of the centrifugal force.

The Applicant also verified that in high-capacity boxing processes, the use of rotary type transfer devices is preferred, which can operate continuously, advantageously preventing mechanical complications and slowdowns due to the acceleration and deceleration phases of discontinuous type transfer devices. Usually, transfer devices of the rotating type are called carousels.

The Applicant noted, however, that the movement of articles in boxes which are still open, carried out by gripper-type manipulators mounted on a carousel, can result in the article contained therein escaping, particularly when high production speeds are required.

The Applicant has therefore realised that the escape of articles from the boxes during the movement stop of the boxes also along a curved trajectory, without placing substantial limitations on the movement speed, can be prevented by providing on the manipulator itself one or more containment elements suitable for retaining the article inside the box, counteracting the centrifugal force to which it is subjected.

The Applicant finally found that the manipulator of articles in boxes which have not yet been closed could be optimised by equipping it with at least one containment element capable of acting in a radially external position with respect to a curvilinear section of a predefined movement path.

Such a solution makes it possible to move said articles in boxes between two conveyor belts or generally between a starting point and an arrival point, avoiding dropping an article contained in said box when it is not yet fully closed. Therefore, in a first aspect thereof, the present invention relates to a manipulator of articles in boxes comprising the features of appended claim 1. Thanks to such features, it is possible to move boxes containing an article even on curvilinear trajectories without any particular speed limitations, minimising damage to the articles contained and minimising the boxes being discarded or lost during movement.

In a second aspect thereof, the present invention relates to a packaging apparatus for packaging articles in boxes comprising the features of appended claim 4.

In a third aspect, the present invention relates to a first embodiment of a process for moving articles in boxes comprising the features of appended claim 8.

In at least one of the above aspects, the present invention may also have at least one of the preferred features set out hereinafter.

In some embodiments, said gripping elements pivot about first axes of rotation parallel to each other and said containment element pivots about a second axis of rotation substantially perpendicular to said first axes of rotation.

Preferably, the pivoting of said gripping elements about the first axes of rotation occurs substantially simultaneously with the pivoting of said containment element about said second axis of rotation.

Preferably, said containment element is configured so as to at least partially obstruct said opening.

Thereby, the action of grasping the box and obstructing the opening can occur simultaneously, reducing the boxing and movement time, and preventing the articles contained in the box from escaping, even at high production speeds of the apparatus.

Alternatively, the pivoting of said gripping elements about the first axes of rotation occurs before the pivoting of said containment element about said second axis of rotation.

The containment element can comprise a head, a bar or other abutment element.

Preferably, said manipulator moves said articles in boxes from a starting point to an arrival point along said predefined path with at least one curvilinear section.

Preferably, a plurality of adhesion elements is interposed between said gripping elements.

Preferably, each of said gripping elements comprises a main body extended longitudinally between a first end region and a second end region.

Preferably, a plurality of prongs extends from said main body, said prongs being configured to abut said box when grasped by said gripping elements. Preferably, said prongs are substantially perpendicular to said movement trajectory.

Preferably, said prongs are movable along the main body, e.g. along said longitudinal extension of the main body.

Thereby, the dimensions of the gripping elements can be adjusted according to the longitudinal extension of the box to be moved.

Preferably, said box is moved by said manipulator substantially within a geometric plane.

Thereby, it is the manipulator that changes its position according to the geometric plane on which said box is to move, so that the box is moved as smoothly and evenly as possible.

Preferably, said geometric plane is a horizontal geometric plane.

Preferably, said curvilinear section is an arc of a circle.

In some embodiments, said box is released by separating it from the adhesion elements and opening the gripping elements and the containment element. Preferably, the separation of the adhesion elements from the box and the opening of the gripping elements take place simultaneously.

Thereby, the substantial simultaneity of the two actions allows high production speeds to be maintained, minimising movement times.

Thereby, at high production speeds and/or predefined curvilinear paths, the adhesion elements hold the box during its movement by the manipulator, preventing said box from escaping from the gripping elements, causing the box and the article to be rejected or, worse, a momentary production stop. Furthermore, the combined action of the adhesion elements and the gripping elements allows for a more secure retention of the box than the presence of the adhesion elements alone, and this aspect is more relevant in the case of articles of a granular nature that may generate dust that could compromise the proper retention of the adhesion elements.

In some embodiments, the adhesion elements are one of suction cups, magnetic elements, Velcro or a combination thereof, more preferably suction cups.

Preferably, said suction cups are adhered to said box, depressurising it through a suction circuit.

Preferably, said suction cup circuit comprises a pump and a control unit. Alternatively, said suction cup circuit comprises a Venturi effect generator and a control unit.

Preferably said control unit is a solenoid valve.

This allows the suction cups to be easily activated and deactivated, controlling the suction flow.

Preferably, said manipulator also comprises two rotational actuators, each connected to a respective gripping element.

According to some embodiments, said rotational actuators, in addition to being free to rotate each about an axis of rotation thereof, can also be displaced horizontally depending on the transverse dimension of the box to be grasped. Preferably, said box contains an article.

Preferably, said article is an article with variable geometry.

Preferably, said apparatus comprises a first carousel rotating about a vertical axis, on which a plurality of manipulators is mounted.

Preferably, said plurality of manipulators is connected to said carousel through respective electromechanical arms.

Preferably, each arm in turn comprises a first end connected to the carousel and a second end connected to the manipulator.

Preferably, said arm comprises an actuating mechanism for each gripping element.

Preferably, the actuation mechanism in turn comprises a plurality of articulated levers which allow the gripping elements to pivot between said open configuration and said gripping configuration and vice versa.

Preferably, said apparatus comprises a second carousel rotating about a vertical axis, on which a plurality of mandrels is mounted.

In some embodiments, one of said articles is arranged in a mandrel, allowing a box to be arranged around the article. Preferably, said box is made around said article starting from a blank by folding around said mandrel.

Preferably, said packaging apparatus is configured so that said manipulator is arranged to take said box from said mandrel and move it along a predefined path comprising at least one curvilinear section. Preferably, the containment element is configured so as to partially enter said box to retain said article when the manipulator moves the box along said predefined path, more preferably along said curvilinear section.

In some embodiments, said mandrel in turn comprises at least one respective positioning element.

Preferably, said positioning element is arranged to retain the article inside the box when said article and said box are arranged on said mandrel.

Preferably, said containment element is configured so as to take over retaining said article in place of said positioning element when the gripping elements grasp said box.

Preferably, the containment element comprises an abutment wall extended transversally to the longitudinal extension of the box.

Preferably, the containment element comprises an abutment wall extended parallel to the first movement trajectory.

Preferably, the containment element and the positioning element are mutually configured to allow the containment element to be arranged inside the box before the positioning element has exited the box.

Preferably, the containment element comprises a first recess extending from the abutment wall to an attachment body thereof, to allow the containment element to pivot without interfering with the positioning element.

Similarly, preferably the positioning element comprises a front element comprising a second recess.

Preferably, said first and second recess are positioned in a complementary manner, e.g. the first recess is at the solid parts of the frontal element, the second recess is at the solid parts of the abutment wall, so as to avoid collisions between the containment element and the positioning element during the production process.

Furthermore, the containment element comprises a connection element which rotatingly connects it to the manipulator through a first hinge.

Preferably, the connection element has an elbow configuration, and at the elbow it has a second hinge to which an actuating rod of the containment element is connected.

Preferably, the actuating rod comprises a first end articulated to the connection element and a second end thereof articulated to one of the articulated levers of the electromechanical arm.

Therefore, said actuating rod can be moved together with the gripping elements and the containment element is preferably pivotably connected, by means of the actuating rod, to the articulated levers of said electromechanical arms. Preferably, said box is picked up by said manipulator by displacing said gripping elements and said containment element in a gripping configuration.

In some embodiments, said mandrel comprises two separate units, capable of accommodating an article therein and abutting a blank during the formation of the closed box.

Preferably, following the formation of the box around said mandrel, the latter breaks down into the starting units along a separation direction, allowing to obtain several advantages, including that of being able to more easily extract such units from the box.

Preferably, said units pass from an operating position, in which the two units are partially contained inside the box, to a non-operating position, in which the two units slide out of said box, displacing along said separation direction. Preferably, at least one of said units is associated with a positioning element, movable with respect to said unit, and arranged to retain said article within said box when said unit is extracted from said box.

The positioning element can comprise a head, bar or other abutment element, preferably extending transversely to the separation direction of the unit.

The head can be moved with respect to the unit by pivoting, or more preferably by means of translation, e.g., by means of a connection rod extended parallel to the separation direction of the unit.

Preferably, said connection rod connects the front element to each respective unit.

In some embodiments, said apparatus comprises at least one conveyor belt. Preferably, said box is released from said manipulator onto said conveyor belt. Preferably, said box is released from said manipulator with a predefined conformation on said conveyor belt.

Preferably, said conveyor belt comprises separator elements.

Preferably, said separator elements are designed to keep said box in said predefined conformation.

Preferably, said gripping elements are shaped so as not to interfere with said separator elements of said conveyor belt.

Thereby, the release of the box takes place close to the conveyor belt, even at high speeds, keeping the box in the conformation conferred by the manipulator and, at the same time, avoiding possible interference between the manipulator and the separator elements, also known as profiles.

Preferably, the suction cup circuit is mounted on said electromechanical arm. In some embodiments, the article contained in the box is a sachet containing loose material, e.g. cereal.

It should be noted that some steps of the above-described process may be independent of the order of execution reported, unless it is expressly indicated that sequentiality or simultaneity between two or more steps is necessary. Furthermore, some steps can be optional. Furthermore, some steps of the process can be performed repetitively, or can be performed in series or in parallel with other steps of the process.

The characteristics and advantages of the invention will become clearer from the detailed description of a preferred embodiment thereof, shown by way of non-limiting example, with reference to the appended drawings, wherein:

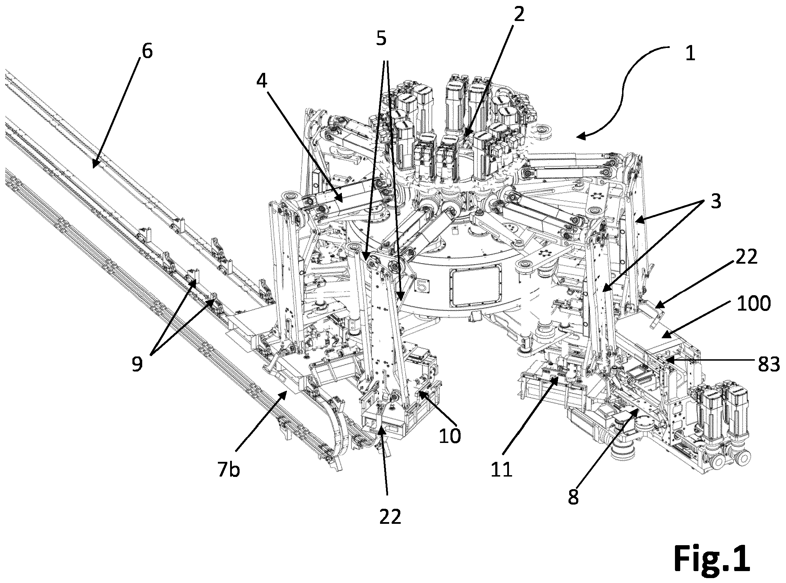

- figure 1 is a perspective view of an apparatus for moving packages with a box-like body provided with manipulators manufactured in accordance with the present solution;

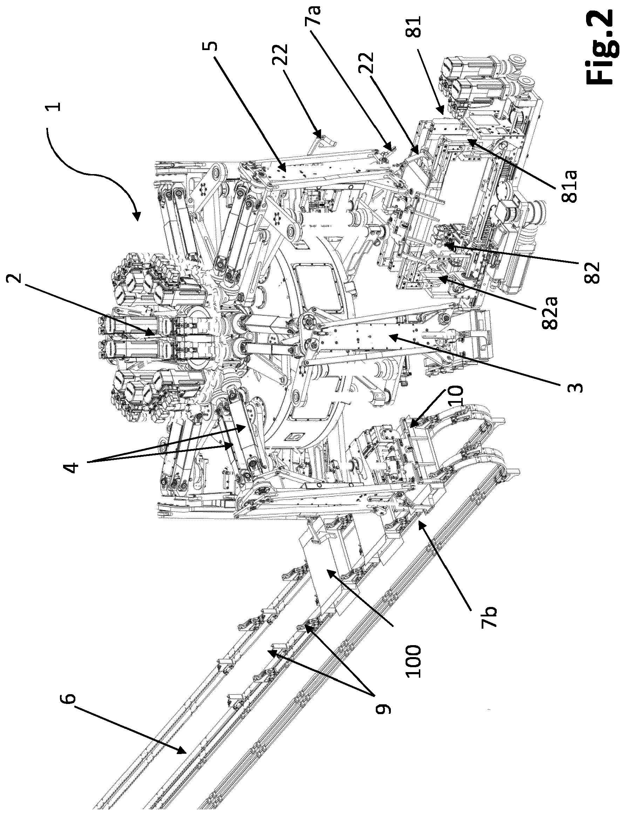

- figure 2 is another perspective view of the apparatus of figure 1;

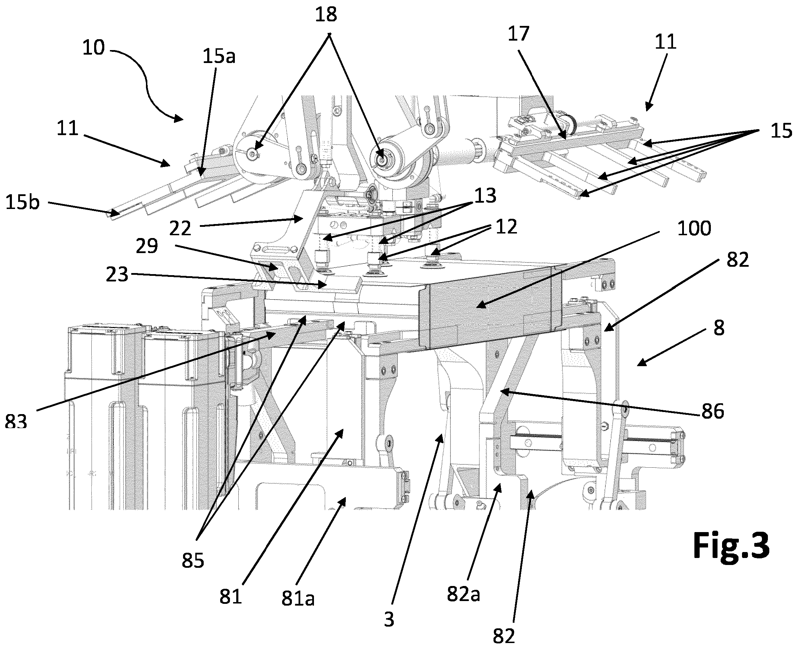

- figure 3 is a radially external perspective view of the manipulator of figure 1 with the gripping elements and the containment element in an intermediate configuration between open configuration and gripping configuration around a box containing an article;

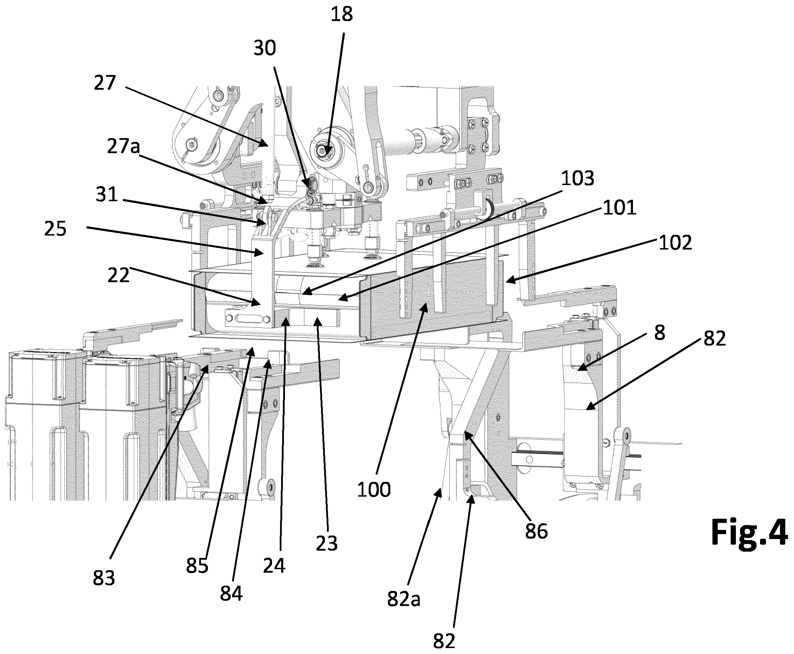

- figure 4 is a radially external perspective view of the manipulator of figure 1 with the gripping elements in an intermediate configuration between open configuration and gripping configuration around a box containing an article;

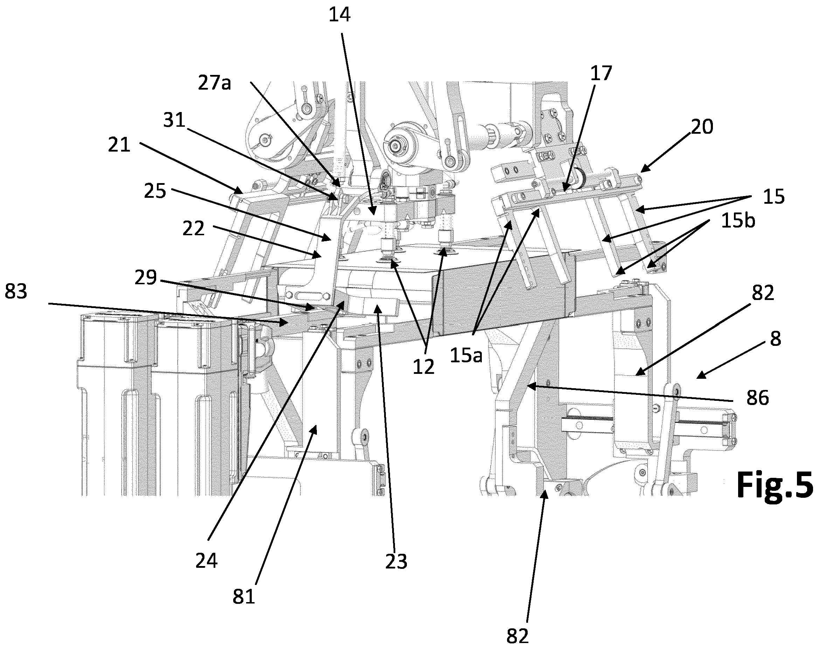

- figure 5 is a radially external perspective view of the manipulator of figure 1 with the gripping elements and the containment element in a gripping configuration of a box containing an article from a mandrel;

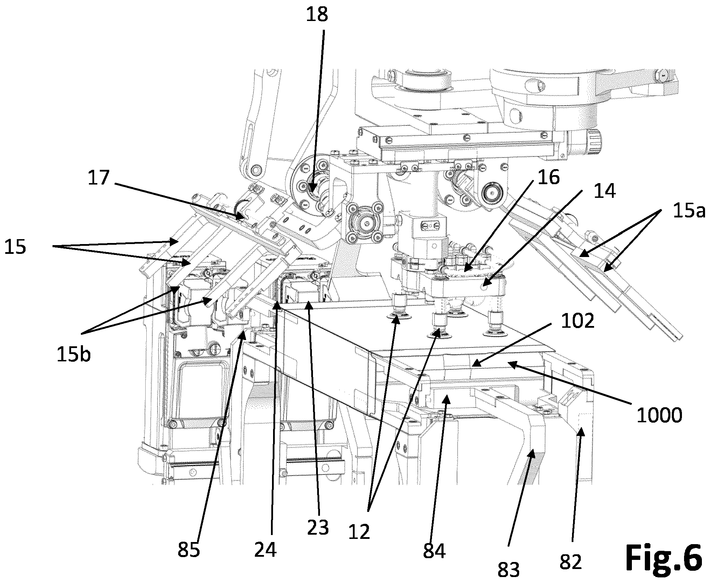

- figure 6 is a radially internal perspective view of the manipulator of figure 1 with the gripping elements and the containment element in an intermediate configuration between open configuration and gripping configuration around a box containing an article;

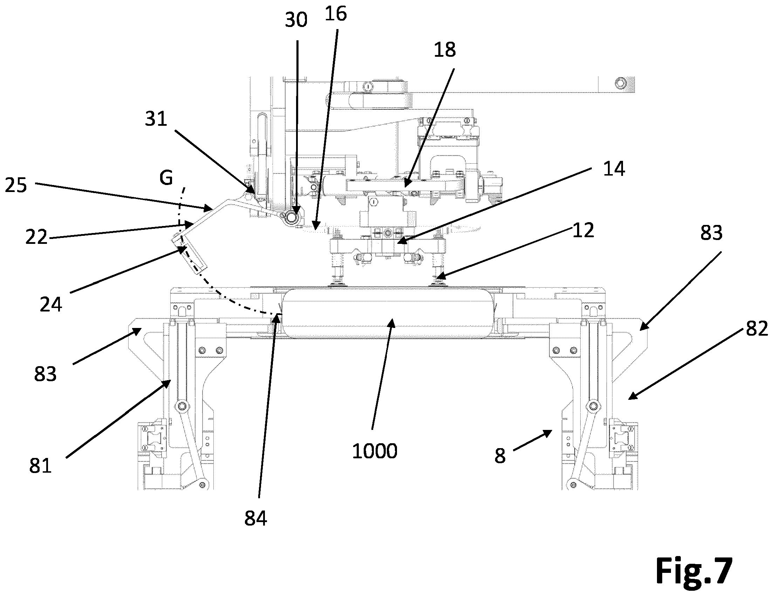

- figure 7 is a sectional side view of the manipulator of figure 1 with the gripping and the containment element in an open configuration and a mandrel in an operating position;

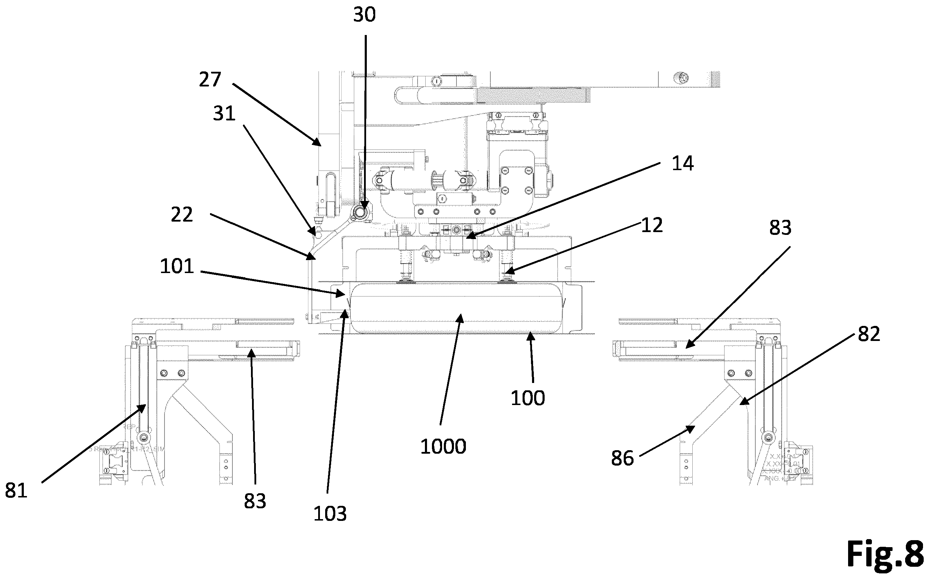

- figure 8 is a sectional side view of the manipulator of figure 1 with the gripping elements and the containment element in a gripping configuration and a mandrel in a non-operating position;

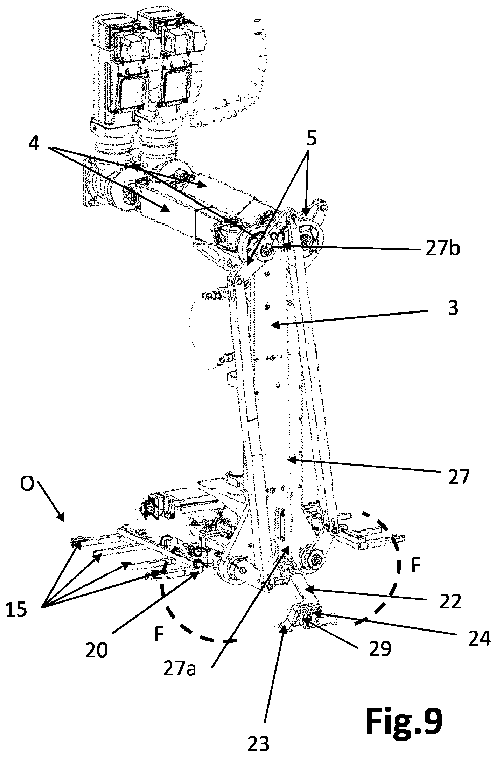

- figure 9 is a perspective view of the manipulator and an electromechanical arm which moves it of figure 1 with the gripping elements and the containment element in an open configuration;

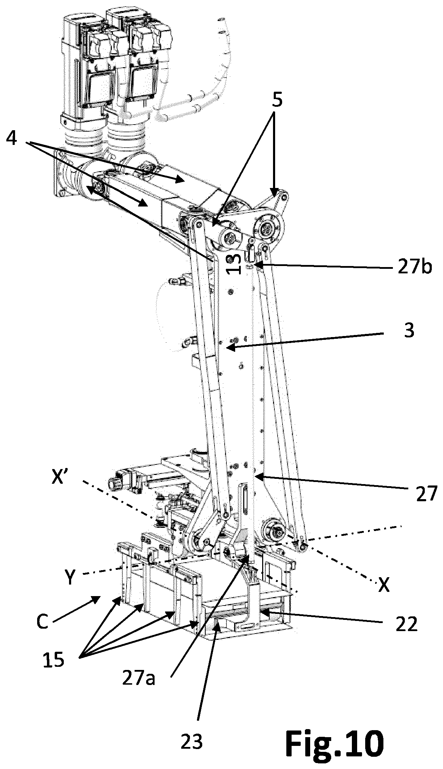

- figure 10 is a perspective view of the manipulator and an electromechanical arm which moves it of figure 1 with the gripping elements and the containment element in a gripping configuration around a box containing articles.

With reference to the appended figures, 1 overall indicates an apparatus for moving packages 100 with a box-like body, for the sake of simplicity also called only boxes 100, and the boxing of articles 1000 with variable geometry, manufactured in accordance with the present solution.

In the preferred case described herein the articles 1000 with variable geometry are sachets containing cereals which must be moved between a starting point 7a and an arrival point 7b.

For this purpose, the apparatus 1 comprises a first carousel 2, rotating about a vertical axis, on which a plurality of manipulators 10 are mounted through respective electromechanical arms 3.

Each arm 3 comprises a first end connected to the carousel 2 and a second end connected to the respective manipulator 10.

The electromechanical arms 3 have three degrees of freedom allowing the vertical, horizontal and rotational displacement of each manipulator 10. Each electromechanical arm 3 can assume different positions during each revolution of the carousel 2: a radial position with respect to the axis of rotation of said first carousel 2, or a position which deviates from the radial position by an angle comprised between -60° and +60°. Said position variation allows said arm 3 to vary its rotational speed during each revolution of the carousel 2.

Each arm 3 comprises an actuation mechanism 4 for each gripping element 11. The actuation mechanism 4 in turn comprises a plurality of articulated levers 5 which allow the gripping elements 11 to pivot between an open configuration O and a gripping configuration C, and vice versa.

In the preferred case described herein, the apparatus 1 also comprises a conveyor belt 6 in which the manipulator 10 deposits the box 100. The conveyor belt 6 thus defines the arrival point 7b of the movement of the packages 100 by the manipulator 10.

The conveyor belt 6 in turn comprises separator elements 9, also known as profiles, arranged in steps along the conveyor belt 6, between which the boxes 100 are released.

Advantageously, the change in rotational speed allows the arm 3 to stay longer at the starting point 7a and the arrival point 7b in order to pick up and release the box 100 while minimising impacts and damage to the articles 1000 contained in the package 100.

The variation in rotational speed also allows the manipulator 10 to couple with said separator elements 9 during the release of the box 100.

Each manipulator 10 is moved between the starting point 7a and the arrival point 7b along a path defined essentially by an arc of a circle, centred on the axis of rotation of the first carousel 2.

Each manipulator 10 comprises a pair of gripping elements 11 cooperating with each other to grasp a box 100 and a containment element 22 to hold an article 1000 inside the box 100, in particular along the circumferential arc. For this purpose, the gripping elements 11 are pivotable along a first movement trajectory F from the open configuration O to the gripping configuration C and vice versa, and the containment element 22 is pivotable along a second movement trajectory G.

In the preferred case shown in the figures, the containment element 22 comprises an abutment wall 23 extended parallel to the first movement trajectory F.

Furthermore, the containment element 22 comprises a connection element 25 which rotatingly connects it to the manipulator 10 through a first hinge 30. The connection element 25 has an elbow configuration, and at the elbow has a second hinge 31 on which an actuating rod 27 of the containment element 22 is articulated.

The actuating rod 27 comprises a first end 27a thereof articulated to the connection element 25 and a second end 27b thereof articulated to one of the articulated levers 5 of the electromechanical arm 3.

Therefore, said actuating rod 27 is moved together with the gripping elements 11 and the containment element 22 is pivotably connected, by means of the actuating rod 27 to the articulated levers 5 of the electromechanical arms 3. Thereby, the containment element 22, when the manipulator 10 is in the gripping configuration C, is positioned so as to keep the article 1000 inside the box 100, in particular when the latter is handled along a curvilinear section of a predefined movement path.

In the preferred case described herein, the boxes 100 have a box-like body extended longitudinally between a front end 101, radially external with respect to said curvilinear section, and a rear end 102, radially internal with respect to said curvilinear section, with an opening 103 at each of said front 101 and rear 102 ends.

The manipulator 10 further comprises a first end region 20, radially external with respect to the curvilinear section of the predefined path along which the box 100 is displaced by the manipulator 10, and a second end region 21, longitudinally opposite the first end region 20 and radially internal with respect to said curvilinear section.

With reference to the figures, said containment element 22 is configured so as to at least partially obstruct said radially external opening 103 when said gripping elements 11 grasp a respective box 100 to move it along said curvilinear section and so as to prevent said articles 1000 from escaping due to the action of the centrifugal force.

The manipulator 10 also comprises a plurality of adhesion elements 12, interposed between the gripping elements 11. Each adhesion element 12 is mounted on a respective elastic support 13.

In the preferred case described herein, the adhesion elements 12 are suction cups connected to a suction circuit 16 while the elastic supports 13 are springs. The suction cups 12 and the respective springs 13 are mounted on a plate 14 with an adjustable position with respect to the gripping elements 11.

The plate 14 is rectangular in shape and there are four suction cups 12 and the respective springs 13, which are arranged symmetrically on the plate 14, in particular they are equidistant from the axes of symmetry of the plate 14. The manipulator 10 also comprises a main body 17 to which the rotational actuators 18 of the gripping elements 11 are rotatably connected.

Each of said gripping elements 11 comprises four prongs 15, extending from the main body 17, substantially perpendicular to the movement trajectory F of the gripping elements 11.

The prongs 15 comprise an attachment end 15a, proximal to the main body 17 and a free end 15b, distal with respect to the main body 17.

The prongs 15 are advantageously movable two by two along the respective main body 17 so as to longitudinally distance or approach the first end region 20 and the second end region 21 along the longitudinal direction of the gripping element 11.

Said gripping elements 11 of the manipulator 10 are shaped so as not to interfere with the separator elements 9.

The plate 14 to which the suction cups 12 with the respective springs 13 are connected is vertically slidable by means of a vertical actuator mounted on the electromechanical arm 3.

The suction circuit 16 of the suction cups 12 comprises a pump and a control unit installed on said arm 3.

In the preferred case described herein, the apparatus 1 also comprises a second carousel on which at least one mandrel 8 is mounted, which arrives near the first carousel 2 and from which the manipulator 10 picks up a box 100 at a point in the trajectory of the mandrel 8 which defines the starting point 7a of the movement of the boxes 100 by means of the manipulator 10.

The mandrel 8 moves along a curvilinear trajectory.

With reference to the figures, the mandrel 8 is arranged to receive the articles 1000 from an article feeder and form a box 2 around them from starting from a blank provided by a blank feeder.

In the preferred case described herein, the mandrel 8 comprises a first unit 81 and a second unit 82, separate and distinct from each other, both mounted on a lower arm radially extended from the second carousel and passing below a work plane of the mandrel 8, fixed to the ground and extended along the circular path on which the mandrels 8 are conducted.

In particular, the first unit 81 and the second unit 82 are mounted on the lower arm by means of a respective upright 81a, 82a erected from the lower arm so as to support the units 81 and 82 above the level defined thereby.

The first unit 81 is therefore in a radially internal position with respect to the axis of rotation of the second carousel, while the second unit 82 is in a radially external position with respect to the axis of rotation of the second carousel. The first unit 81 and the second unit 82 are substantially identical to each other and are arranged facing each other.

Each mandrel 8 further comprises a movement system configured to displace the first unit 81 and the second unit 82 with respect to each other between an operating position, in which the two units 81, 82 are brought closer to each other so as to compose said mandrel 8, and a non-operating position in which the two units 81, 82 are moved away from each other, so as to decompose the mandrel 8.

In particular, the two units 81 and 82 are moved between the operating position and the non-operating position by sliding along the lower arm, and are therefore approached and distanced along a substantially radial separation direction with respect to the second carousel 8.

Each unit 81, 82 comprises a positioning element 83 arranged to retain the article 1000 inside the box 100 when the first and the second unit 81, 82 are extracted from the box 100.

The positioning element 82 is movable with respect to the respective first or second unit 81, 82 and is moved so that the containment element 22 takes over said positioning element 83, without coming into contact with each other, when said manipulator 10 is arranged in the gripping configuration C and the mandrel 8 is in the non-operating configuration.

The containment element 22 and the positioning element 83 are mutually configured to allow the containment element 22 to arrange itself inside the box 100 before the positioning element 83 has exited the box.

In fact, the containment element 22 comprises a first recess 29 extending from the abutment wall 23 to an attachment body 24 thereof, to allow the containment element 22 to pivot without interfering with the positioning element 83.

Similarly, the positioning element 83 which is radially internal with respect to the axis of rotation of the second carousel comprises a front element 84 comprising a second recess 85 and a connection rod 86 connecting the front element 84 to each respective unit 81, 82.

Said first 29 and second 85 recess are positioned in a complementary manner, the first recess 29 being at the solid parts of the front element 84, the second recess 85 being at the solid parts of the abutment wall 23, so as to avoid collisions between the containment element 22 and the positioning element 83 during the production process.

In the preferred case described herein, the positioning element 83 which is radially external with respect to the axis of rotation of the second carousel has a frontal element 84 without recesses.

To move the boxes 100, the manipulator 10, with the gripping elements 11 in the open configuration O, is brought by the first carousel 2 close to the starting point 7a, viz., at a mandrel 8 containing the article 1000 to be packaged and around which the box-like body of the box 100 has been formed.

At this point, the box 100 contained in the mandrel 8 is grasped by means of the manipulator 10 moving the gripping elements 11 along the first movement trajectory F from the open configuration O to the gripping configuration C. During this movement, the containment element 22 at least partially obstructs said opening 103 of the radially external front end 101.

Thereby, the centrifugal force is counteracted and the article 1000 contained in the box 100 is prevented from escaping through the opening 103 and, in particular, through the opening 103 of the front end 101 of the box 100 which is in a radially external position with respect to the rotational movement of the manipulator 10.

At the same time, the suction cups 12 are activated, so that the package 100 is further retained from above.

The box 100 is then displaced from the mandrel 8 to the conveyor belt 6, moving the manipulator 10 along the curvilinear path defined by the rotation of the first carousel 2. It will be noted that the article 1000 contained in the package 100, although pushed outwards by the centrifugal force due to the curvilinear path of the manipulator 10, is retained inside the package 100 by the presence of the containment element 22.

Upon reaching the arrival point 7b, at the conveyor belt 6, the manipulator 10 releases the box 100, deactivating the suction cups 12 and displacing the gripping elements to the open configuration O.

In particular, the release of the box 100 takes place between two rows of separator elements 9, so that the square shape of the box 100 imposed by the manipulator 10 is also maintained in the subsequent displacement along the conveyor belt 6.

The present solution thus makes it possible to solve the technical problem identified above, while at the same time achieving further advantages, including the possibility of easily adjusting one or more dimensions of the manipulator 10 according to the dimensions of the box 100 to be moved.

It goes without saying that, in order to meet specific and contingent application needs, a person skilled in the art will be able to make further modifications and variants to the solution described above that are nevertheless within the scope of protection as defined by the following claims.

## Claims

1. Manipulator (10) of articles (1000) in boxes (100), the manipulator (10) being moved along a predefined path comprising at least one curvilinear section, the boxes (100) comprising a box-like body extending longitudinally between a front end (101), radially external with respect to said curvilinear section, and a rear end (102), radially internal with respect to said curvilinear section, said box-like body having an opening (103) at least at said front end (101), said manipulator (10) comprising a pair of gripping elements (11) cooperating with each other for grasping one of said boxes (100) and a containment element (22) in a radially external position with respect to said curvilinear section, the manipulator (10) being movable from an open configuration (O) to a gripping configuration (C) and vice versa, the gripping elements (11) and the containment element (22) being pivotable respectively along a first movement trajectory (F) and a second movement trajectory (G) between said open configuration (O) and said gripping configuration (C) and vice versa, the containment element (22) being configured so as to obstruct, at least partially, said opening (103) when the gripping elements (11) grasp a respective box (100) to move it along said curvilinear section, and so as to prevent said articles (1000) from escaping.

2. Manipulator (10) according to claim 1, wherein said gripping elements (11) pivot about first axes of rotation (X, X') parallel to each other and said containment element (22) pivots about a second axis of rotation (Y) substantially perpendicular to said first axes of rotation (X,X').

3. Manipulator (10) according to claim 1 or 2, wherein a plurality of adhesion elements (12) is interposed between said gripping elements (11), wherein said adhesion elements (12) preferably comprise suction cups.

4. Apparatus for packaging (1) articles (1000) in boxes (100) comprising:
- a manipulator (10) for boxes (100) according to claims 1 to 3;
- a mandrel (8) configured to accommodate inside itself one of said articles (1000) around which a box (100) is arranged;
said packaging apparatus (1) is configured in such a way that said manipulator (10) is arranged to take said box (100) from said mandrel (8) and move it along a predefined path comprising at least one curvilinear section; moreover, the containment element (22) is configured to partially enter said box (100) to retain said article (1000) when the manipulator (10) moves the box (100) along said curvilinear section.

5. Apparatus (1) according to claim 4, wherein said mandrel (8) comprises in turn at least one respective positioning element (83) arranged to retain the article (1000) inside the box (100) when said article (1000) and said box (100) are arranged on said mandrel (8), said containment element (22) is configured to take over said positioning element (83) in retaining said article (1000) in place along said predefined path.

6. Apparatus (1) according to claim 4 or 5 comprising a carousel (2), rotating about a vertical axis, on which a plurality of manipulators (10) is mounted via respective electromechanical arms (3), each arm (3) comprising in turn a first end connected to the carousel (2) and a second end connected to the manipulator (10).

7. Apparatus (1) according to claim 6 wherein said arm (3) comprises an actuation mechanism (4) for each gripping element (11), the actuation mechanism (4) in turn comprising a plurality of articulated levers (5) which allow the pivoting of the gripping elements (11) between said open configuration (O) and said gripping configuration (C) and vice versa, said containment element (22) being pivotably connected via an actuating rod (27) to one of said articulated levers (5).

8. Process for moving articles (1000) in boxes (100) along a predefined path comprising at least one curvilinear section, said boxes (100) having a box-like body extending longitudinally between a front end (101) and a rear end (102), said box-like body having an opening (103) at least at one of said ends (101, 102) radially external with respect to said curvilinear section, the process comprising:
- providing a manipulator (10) on which a pair of gripping elements (11) and a containment element (22) in the open configuration (O) are mounted;
- grasping one of said boxes (100) by means of said manipulator (10) making the gripping elements (11) pivot in a gripping configuration (C);
- at least partially obstructing said opening (103) with the containment element (22) so as to contain said article (1000) inside the box (100) at least in said curvilinear section by making the containment element (22) pivot in a gripping configuration (C);
- moving said box (100) by displacing said manipulator (10) along said predefined path;
- releasing said box (100).

9. Process according to claim 8, further comprising:
- releasing at least one article (1000) inside a mandrel (8);
- arranging the box (100) at least partially closed around said article (1000) released in said mandrel (8);
- leaving said article (1000) positioned inside said box (100).

10. Process according to claim 9, wherein after having arranged a box (100) at least partially closed around said article (1000) released in said mandrel (8), at least one positioning element (83) movably connected to said mandrel (8) is arranged to keep said article (1000) positioned inside said box (100) and the containment element (22) shall take over said positioning element (83) to at least partially obstruct said opening (103).

11. Process according to claims 8 to 10, wherein while said gripping elements (11) are displaced in said gripping configuration (C), said containment element (22) at least partially obstructs said opening (103).

12. Process according to any one of claims 8 to 11, wherein said box (100) is moved by said manipulator (10) substantially within a geometric plane, preferably a horizontal geometric plane.

13. Process according to any one of claims 8 to 12, wherein said box (100) is released by displacing said gripping elements (11) in said open configuration (O).

14. Process according to any one of claims 8 to 13, wherein said box (100) is released by said manipulator (10) with a predefined conformation on a conveyor belt (6) comprising separator elements (9), said separator elements (9) being provided to maintain said box (100) in said predefined conformation.

15. Process according to claim 14, wherein said gripping elements (11) are shaped so as not to interfere with said separator elements (9) of said conveyor belt (6).

## Patentansprüche

1. Manipulator (10) für Gegenstände (1000) in Schachteln (100), wobei der Manipulator (10) entlang eines vorbestimmten Weges bewegt wird, der zumindest einen gekrümmten Abschnitt aufweist, wobei die Schachteln (100) einen schachtelartigen Körper aufweisen, der sich in Längsrichtung zwischen einem vorderen Ende (101), das radial außerhalb in Bezug auf den gekrümmten Abschnitt liegt, und einem hinteren Ende (102) erstreckt, das radial innerhalb in Bezug auf den gekrümmten Abschnitt liegt, wobei der schachtelförmige Körper zumindest eine Öffnung (103) am vorderen Ende (101) aufweist, wobei der Manipulator (10) ein Paar von miteinander zusammenwirkenden Greifelementen (11) zum Greifen einer der Schachteln (100) und ein Aufnahmeelement (22) in einer radial äußeren Position in Bezug auf den gekrümmten Abschnitt aufweist, wobei der Manipulator (10) von einer offenen Anordnung (O) in eine Greifanordnung (C) und umgekehrt bewegbar ist, wobei die Greifelemente (11) und das Aufnahmeelement (22) jeweils entlang einer ersten Bewegungsbahn (F) und einer zweiten Bewegungsbahn (G) zwischen der offenen Anordnung (O) und der Greifanordnung (C) und umgekehrt schwenkbar sind, wobei das Aufnahmeelement (22) eingerichtet ist, um die Öffnung (103) zumindest teilweise zu verschließen, wenn die Greifelemente (11) eine jeweilige Schachtel (100) greifen, um sie entlang des gekrümmten Abschnitts zu bewegen, und um zu verhindern, dass die Gegenstände (1000) herausfallen.

2. Manipulator (10) nach Anspruch 1, wobei die Greifelemente (11) um zueinander parallele erste Drehachsen (X, X') schwenkbar sind und das Aufnahmeelement (22) um eine zweite Drehachse (Y) schwenkbar ist, die im Wesentlichen senkrecht zu den ersten Drehachsen (X, X') steht.

3. Manipulator (10) nach Anspruch 1 oder 2, wobei eine Mehrzahl von Haftelementen (12) zwischen den Greifelementen (11) angeordnet ist, wobei die Haftelemente (12) vorzugsweise Saugnäpfe aufweisen.

4. Vorrichtung zum Verpacken (1) von Gegenständen (1000) in Schachteln (100), umfassend:
- einen Manipulator (10) für Schachteln (100) nach Anspruch 1 bis 3;
- eine Matrize (8), die eingerichtet ist, um in ihrem Inneren einen der Gegenstände (1000) aufzunehmen, um den eine Schachtel (100) angeordnet ist;
- wobei die Verpackungsvorrichtung (1) derart eingerichtet ist, dass der Manipulator (10) angeordnet ist, um die Schachtel (100) von der Matrize (8) aufzunehmen und sie entlang eines vorbestimmten Weges zu bewegen, die zumindest einen gekrümmten Abschnitt aufweist; wobei ferner das Aufnahmeelement (22) eingerichtet ist, um teilweise in die Schachtel (100) einzutreten, um den Gegenstand (1000) zu halten, wenn der Manipulator (10) die Schachtel (100) entlang des gekrümmten Abschnitts bewegt.

5. Vorrichtung (1) nach Anspruch 4, wobei die Matrize (8) wiederum zumindest ein jeweiliges Positionierungselement (83) aufweist, das angeordnet ist, um den Gegenstand (1000) innerhalb der Schachtel (100) zu halten, wenn der Gegenstand (1000) und die Schachtel (100) auf der Matrize (8) angeordnet sind, wobei das Aufnahmeelement (22) eingerichtet ist, um die Funktion des Positionierungselements (83) zu übernehmen, um den Gegenstand (1000) entlang des vorbestimmten Weges in seiner Position zu halten.

6. Vorrichtung (1) nach Anspruch 4 oder 5 mit einem sich um eine vertikale Achse drehenden Karussell (2), an dem eine Mehrzahl von Manipulatoren (10) über jeweilige elektromechanische Arme (3) montiert ist, wobei jeder Arm (3) wiederum ein erstes Ende, das mit dem Karussell (2) verbunden ist, und ein zweites Ende aufweist, das mit dem Manipulator (10) verbunden ist.

7. Vorrichtung (1) nach Anspruch 6, wobei der Arm (3) einen Betätigungsmechanismus (4) für jedes Greifelement (11) aufweist, wobei der Betätigungsmechanismus (4) wiederum eine Mehrzahl von Gelenkhebeln (5) aufweist, die das Schwenken der Greifelemente (11) zwischen der offenen Anordnung (O) und der Greifanordnung (C) und umgekehrt ermöglichen, wobei das Aufnahmeelement (22) über eine Betätigungsstange (27) schwenkbar mit einem der Gelenkhebel (5) verbunden ist.

8. Verfahren zum Bewegen von Gegenständen (1000) in Schachteln (100) entlang eines vorbestimmten Weges, der zumindest einen gekrümmten Abschnitt aufweist, wobei die Schachteln (100) einen schachtelförmigen Körper aufweisen, der sich in Längsrichtung zwischen einem vorderen Ende (101) und einem hinteren Ende (102) erstreckt, wobei der schachtelförmige Körper an zumindest einem der Enden (101, 102) eine Öffnung (103) aufweist, die radial außerhalb in Bezug auf den gekrümmten Abschnitt liegt, wobei das Verfahren aufweist:
- Vorsehen eines Manipulators (10), an dem ein Paar Greifelemente (11) und ein Aufnahmeelement (22) in der offenen Anordnung (O) montiert sind;
- Greifen einer der Schachteln (100) mittels des Manipulators (10), wodurch die Greifelemente (11) in eine Greifanordnung (C) geschwenkt werden;
- zumindest teilweises Verschließen der Öffnung (103) mit dem Aufnahmeelement (22), um den Gegenstand (1000) innerhalb der Schachtel (100) zumindest im gekrümmten Abschnitt zu halten, indem das Aufnahmeelement (22) in eine Greifanordnung (C) geschwenkt wird;
- Bewegen der Schachtel (100) durch Verschieben des Manipulators (10) entlang des vorbestimmten Weges;
- Freigeben der Schachtel (100).

9. Verfahren nach Anspruch 8, ferner umfassend:
- Freigeben von zumindest einem Gegenstand (1000) innerhalb einer Matrize (8);
- Anordnen der Schachtel (100), die zumindest teilweise um den in der Matrize (8) freigegebenen Gegenstand (1000) geschlossen ist;
- Belassen des in der Schachtel (100) positionierten Gegenstands (1000).

10. Verfahren nach Anspruch 9, wobei nach dem Anordnen einer Schachtel (100), die zumindest teilweise um den in der Matrize (8) freigegebenen Gegenstand (1000) geschlossenen ist, zumindest ein Positionierungselement (83), das beweglich mit der Matrize (8) verbunden ist, angeordnet ist, damit der Gegenstand (1000) in der Schachtel (100) positioniert bleibt und das Aufnahmeelement (22) die Funktion des Positionierungselements (83) übernimmt, um die Öffnung (103) zumindest teilweise zu verschließen.

11. Verfahren nach den Ansprüchen 8 bis 10, wobei, während die Greifelemente (11) in der Greifkonfiguration (C) verschoben sind, das Aufnahmeelement (22) die Öffnung (103) zumindest teilweise verschließt.

12. Verfahren nach einem der Ansprüche 8 bis 11, wobei die Schachtel (100) durch den Manipulator (10) im Wesentlichen innerhalb einer geometrischen Ebene, vorzugsweise einer horizontalen geometrischen Ebene, bewegt wird.

13. Verfahren nach einem der Ansprüche 8 bis 12, wobei die Schachtel (100) durch Verschieben der Greifelemente (11) in der offenen Konfiguration (O) freigegeben wird.

14. Verfahren nach einem der Ansprüche 8 bis 13, wobei die Schachtel (100) durch den Manipulator (10) mit einer vorbestimmten Formgebung auf einem Förderband (6) freigegeben wird, das Trennelemente (9) aufweist, wobei die Trennelemente (9) vorgesehen sind, um die Schachtel (100) in der vorbestimmten Formgebung zu halten.

15. Verfahren nach Anspruch 14, wobei die Greifelemente (11) geformt sind, um die Trennelemente (9) des Förderbandes (6) nicht zu beeinträchtigen.

## Revendications

1. Manipulateur (10) d'articles (1000) contenus dans des boîtes (100), le manipulateur (10) étant déplacé le long d'un trajet prédéfini comprenant au moins une section curviligne, les boîtes (100) comprenant un corps en forme de boîte s'étendant longitudinalement entre une extrémité avant (101), radialement externe par rapport à ladite section curviligne, et une extrémité arrière (102), radialement interne par rapport à ladite section curviligne, ledit corps en forme de boîte présentant une ouverture (103) au moins au niveau de ladite extrémité avant (101), ledit manipulateur (10) comprenant une paire d'éléments de préhension (11) coopérant l'un avec l'autre pour saisir l'une desdites boîtes (100) et un élément de confinement (22) dans une position radialement externe par rapport à ladite section curviligne, le manipulateur étant mobile d'une configuration ouverte (O) à une configuration de préhension (C) et inversement, les éléments de préhension (11) et l'élément de confinement (22) pouvant pivoter respectivement le long d'une première trajectoire de mouvement (F) et d'une seconde trajectoire de mouvement (G) entre ladite configuration ouverte (O) et ladite configuration de préhension (C) et inversement, l'élément de confinement (22) étant configuré de manière à obstruer, au moins partiellement, ladite ouverture (103) lorsque les éléments de préhension (11) saisissent une boîte respective (100) pour la déplacer le long de ladite section curviligne, et de manière à empêcher lesdits articles (1000) de s'échapper.

2. Manipulateur (10) selon la revendication 1, dans lequel lesdits éléments de préhension pivotent autour de premiers axes de rotation (X, X') parallèles entre eux et ledit élément de confinement (22) pivote autour d'un deuxième axe de rotation (Y) sensiblement perpendiculaire auxdits premiers axes de rotation (X, X').

3. Manipulateur (10) selon la revendication 1 ou 2, dans lequel une pluralité d'éléments d'adhérence (12) est intercalée entre lesdits éléments de préhension (11), dans lequel lesdits éléments d'adhérence (12) comprennent de préférence des ventouses.

4. Appareil pour l'emballage (1) d'articles (1000) dans des boîtes (100), comprenant :
- un manipulateur (10) pour boîtes (100) selon les revendications 1 à 3 ;
- un mandrin (8) configuré pour accueillir à l'intérieur de celui-ci l'un desdits articles (1000) autour duquel est disposée une boîte (100) ;
ledit appareil d'emballage (1) est configuré de telle sorte que ledit manipulateur (10) soit agencé pour prélever ladite boîte (100) dudit mandrin (8) et la déplacer le long d'un trajet prédéfini comprenant au moins une section curviligne ; de plus, l'élément de confinement (22) est configuré pour pénétrer partiellement dans ladite boîte (100) afin de retenir ledit article (1000) lorsque le manipulateur (10) déplace la boîte (100) le long de ladite section curviligne.

5. Appareil (1) selon la revendication 4, dans lequel ledit mandrin (8) comprend à son tour au moins un élément de positionnement (83) respectif agencé pour retenir l'article (1000) à l'intérieur de la boîte (100) lorsque ledit article (1000) et ladite boîte (100) sont disposés sur ledit mandrin (8), ledit élément de confinement (22) est configuré pour prendre le relais dudit élément de positionnement (83) afin de retenir ledit article (1000) en place le long dudit trajet prédéfini.

6. Appareil (1) selon la revendication 4 ou 5, comprenant un carrousel (2) tournant autour d'un axe vertical, sur lequel est montée une pluralité de manipulateurs (10) par l'intermédiaire de bras électromécaniques respectifs (3), chaque bras (3) comprenant à son tour une première extrémité reliée au carrousel (2) et une seconde extrémité reliée au manipulateur (10).

7. Appareil (1) selon la revendication 6, dans lequel ledit bras (3) comprend un mécanisme d'actionnement (4) pour chaque élément de préhension (11), le mécanisme d'actionnement (4) comprenant à son tour une pluralité de leviers articulés (5) qui permettent le pivotement des éléments de préhension (11) entre ladite configuration ouverte (O) et ladite configuration de préhension (C) et inversement, ledit élément de confinement (22) étant relié de manière pivotante, par l'intermédiaire d'une tige d'actionnement (27), à l'un desdits leviers articulés (5).

8. Procédé pour déplacer des articles (1000) contenus dans des boîtes (100) le long d'un trajet prédéfini comprenant au moins une section curviligne, lesdites boîtes (100) présentant un corps en forme de boîte s'étendant longitudinalement entre une extrémité avant (101) et une extrémité arrière (102), ledit corps en forme de boîte présentant une ouverture (103) au niveau d'au moins l'une desdites extrémités (101, 102), située radialement à l'extérieur par rapport à ladite section curviligne, le procédé comprenant :
- la fourniture d'un manipulateur (10) sur lequel sont montés une paire d'éléments de préhension (11) et un élément de confinement (22) dans la configuration ouverte (O) ;
- la saisie de l'une desdites boîtes (100) au moyen dudit manipulateur (10) en faisant pivoter les éléments de préhension (11) dans une configuration de préhension (C) ;
- l'obstruction au moins partielle de ladite ouverture (103) avec l'élément de confinement (22) de manière à confiner ledit article (1000) à l'intérieur de la boîte (100), au moins dans ladite section curviligne, en faisant pivoter l'élément de confinement (22) dans une configuration de préhension (C) ;
- le déplacement de ladite boîte (100) en déplaçant ledit manipulateur (10) le long dudit trajet prédéfini ;
- la libération de ladite boîte (100).

9. Procédé selon la revendication 8, comprenant en outre :
- la libération d'au moins un article (1000) à l'intérieur d'un mandrin (8) ;
- la disposition de la boîte (100) au moins partiellement fermée autour dudit article (1000) libéré dans ledit mandrin (8) ;
- le maintien dudit article (1000) positionné à l'intérieur de ladite boîte (100).

10. Procédé selon la revendication 9, dans lequel, après avoir disposé une boîte (100) au moins partiellement fermée autour dudit article (1000) libéré dans ledit mandrin (8), au moins un élément de positionnement (83), relié de manière mobile audit mandrin (8), est agencé pour maintenir ledit article (1000) positionné à l'intérieur de ladite boîte (100) et l'élément de confinement (22) doit prendre le relais dudit élément de positionnement (83) afin d'obstruer au moins partiellement ladite ouverture (103).

11. Procédé selon les revendications 8 à 10, dans lequel, pendant que lesdits éléments de préhension (11) sont déplacés dans ladite configuration de préhension (C), ledit élément de confinement (22) obstrue au moins partiellement ladite ouverture (103).

12. Procédé selon l'une quelconque des revendications 8 à 11, dans lequel ladite boîte (100) est déplacée par ledit manipulateur (10) sensiblement dans un plan géométrique, de préférence un plan géométrique horizontal.

13. Procédé selon l'une quelconque des revendications 8 à 12, dans lequel ladite boîte (100) est libérée par le déplacement desdits éléments de préhension (11) dans ladite configuration ouverte (O).

14. Procédé selon l'une quelconque des revendications 8 à 13, dans lequel ladite boîte (100) est libérée par ledit manipulateur (10) avec une conformation prédéfinie sur une bande transporteuse (6) comprenant des éléments de séparation (9), lesdits éléments de séparation (9) étant prévus pour maintenir ladite boîte (100) dans ladite conformation prédéfinie.

15. Procédé selon la revendication 14, dans lequel lesdits éléments de préhension (11) sont conformés de manière à ne pas interférer avec lesdits éléments de séparation (9) de ladite bande transporteuse (6).
